# FASCICULE DE BREVET EUROPEEN

(11) **EP 3 430 786 B1**
(45) Date de publication et mention de la délivrance du brevet: **07.08.2024**
(21) Numéro de dépôt: 17715227.9
(22) Date de dépôt: 14.03.2017
(51) Int. Cl.: H04L 67/125, H04N 21/6587, H04L 65/612

(54) **ACQUISITION D'EXTRAITS D'UN FLUX MULTIMÉDIA SUR UN TERMINAL**
ERFASSUNG VON EXTRAKTEN EINES MULTIMEDIASTROMS AUF EINEM ENDGERÄT
ACQUISITION OF EXTRACTS OF A MULTIMEDIA STREAM ON A TERMINAL

(30) Priorité: 16.03.2016 FR 1652229
(43) Date de publication de la demande: 23.01.2019
(73) Titulaire: Orange, 92130 Issy-les-Moulineaux (FR)
(72) Inventeur: DA FONSECA, Caroline, 94880 Noiseau (FR); RUELLO, Yann, 92160 Antony (FR); RUFIN, Christophe, 92100 Boulogne Billancourt (FR)
(86) Numéro de dépôt international: PCT/FR2017/050568
(87) Numéro de publication internationale: WO 2017/158274

(56) Documents cités:
- EP-A1- 1 788 806
- WO-A1-2006/012378
- WO-A1-2015/188629
- US-A1- 2015 016 799

## Description

La présente invention concerne le domaine de l'accès à des contenus multimédias, en particulier à des extraits d'un flux multimédia diffusé, depuis un terminal utilisateur.

L'invention s'applique avantageusement à un terminal utilisateur de type terminal portatif (Smartphone, tablette tactile, « *Personal Digital Assistant* » PDA, etc).

Les décodeurs TV, de type SetTop Box par exemple, remplissent désormais un grand nombre de fonctionnalités : en plus de recevoir de contenus multimédia issus d'une ou plusieurs chaînes de télévision, ils peuvent permettre l'accès à un réseau de type IP afin de récupérer par exemple des contenus auprès d'un serveur dédié, ou afin de recevoir des données contextuelles ou métadonnées associées à un contenu multimédia en cours de diffusion.

En outre, la SetTop Box peut être un point d'accès sans-fil, Wi-fi par exemple, pour permettre à des terminaux utilisateurs autres que le téléviseur, d'accéder au réseau IP.

La SetTop Box présente par ailleurs des fonctions d'enregistrement permettant à l'utilisateur, via une télécommande, d'activer l'enregistrement d'un contenu multimédia en cours de diffusion ou de programmer l'enregistrement d'un contenu multimédia dont la diffusion est prévue ultérieurement.

Toutefois, non seulement la programmation d'un tel enregistrement est complexe et sujette à erreur (elle requiert la définition du début de l'enregistrement et de la fin de l'enregistrement, elle requiert de vérifier que la mémoire de stockage disponible sur la SetTop Box est suffisante) mais en plus elle ne facilite pas le partage du contenu enregistré.

Le document de l'art antérieur WO2015188629 décrit un procédé et un système pour une interaction client-serveur en temps réel basée sur un contenu multimédia en continu.

Un autre document de l'art antérieur, US2015016799, concerne un procédé de capture d'une scène sur un écran de télévision (TV) et de partage de la scène capturée avec un service social à l'aide d'un deuxième dispositif.

Par exemple, si un utilisateur souhaite récupérer le contenu sur un terminal utilisateur accédant à la SetTop Box, il doit rechercher le contenu parmi un ensemble de contenus stockés sur la SetTop Box, puis l'exporter vers le terminal utilisateur pour ensuite pouvoir le partager (sur un réseau social par exemple).

En outre, ces solutions sont peu adaptées à l'acquisition d'extraits courts (quelques minutes) d'un flux multimédia diffusé.

La présente invention vient améliorer la situation.

A cet effet, un premier aspect de l'invention concerne un procédé d'acquisition d'un extrait de flux multimédia en cours de diffusion sur un dispositif d'affichage d'un utilisateur, le procédé étant mis en oeuvre dans un terminal utilisateur distinct du dispositif d'affichage et comprenant les étapes suivantes:
- sur réception d'une entrée utilisateur pour recevoir un extrait du flux multimédia en cours de diffusion sur le dispositif d'affichage, envoyer une première requête au dispositif d'affichage pour requérir un identifiant du flux multimédia en cours de diffusion ;
- sur réception de l'identifiant du flux multimédia en cours de diffusion, envoyer une deuxième requête au serveur de contenus, pour recevoir l'extrait de flux multimédia, la deuxième requête comprenant une estampille temporelle de l'entrée utilisateur, l'identifiant du flux multimédia en cours de diffusion et une durée de l'extrait de flux multimédia ;
- recevoir, depuis le serveur de contenus, l'extrait de flux multimédia ou un lien pour obtenir l'extrait de flux multimédia.

On entend par « terminal utilisateur » tout terminal, de préférence portatif, présentant une interface utilisateur intégrée, tel qu'un Smartphone, une tablette tactile, un PDA, un ordinateur portage.

On entend par « dispositif d'affichage » tout dispositif dont la fonction principale est l'affichage de contenus multimédia. Il peut par exemple s'agir d'un téléviseur, d'un ordinateur de bureau, d'un vidéoprojecteur, etc.

On entend par « entrée utilisateur » toute interaction prédéterminée entre l'utilisateur et l'interface utilisateur du terminal utilisateur. Il peut par exemple s'agir d'un clic, d'une action tactile (toucher, toucher-glisser, etc), de l'action mécanique sur un bouton ou même d'une commande vocale.

Ainsi, la présente invention permet l'acquisition d'extraits de flux multimédia de manière aisée et rapide pour l'utilisateur, en réduisant les interactions nécessaires pour l'obtention des extraits. De plus, l'acquisition de l'identifiant du flux est automatisée entre le terminal utilisateur et le dispositif d'affichage (ou un décodeur du dispositif d'affichage), améliorant ainsi la réactivité associée à l'envoi de la deuxième requête. En outre, l'acquisition de l'extrait peut être opérée via un terminal utilisateur présentant une interface utilisateur plus ergonomique que celle du dispositif d'affichage (qui est généralement une télécommande).

Selon un mode de réalisation la durée de l'extrait de flux multimédia est prédéterminée.

Ainsi, l'utilisateur n'a pas besoin de définir la durée de l'extrait souhaité, améliorant ainsi la réactivité du procédé. Un tel mode est particulièrement avantageux dans le contexte de l'acquisition d'extraits courts.

Selon un mode de réalisation, le procédé peut comprendre une étape préalable de lancement, sur le terminal utilisateur, d'une application dédiée au serveur de contenus, et l'entrée utilisateur peut être reçue depuis une interface graphique de l'application lancée.

L'utilisation d'une application dédiée permet de faciliter l'acquisition de l'extrait et d'améliorer la réactivité du procédé.

Selon un mode de réalisation, l'identifiant du flux multimédia en cours de diffusion peut être reçu depuis un décodeur relié au dispositif d'affichage, le décodeur étant apte à traiter un flux multimédia reçu pour un affichage sur le dispositif d'affichage.

On entend par décodeur tout dispositif apte à traiter un flux multimédia tel qu'un flux télévisuel par exemple, pour transmission au dispositif d'affichage. Ainsi, le décodeur peut être de type Set Top Box par exemple.

En complément, le décodeur peut en outre comprendre un point d'accès sans-fil à un réseau IP, et le terminal utilisateur peut accéder au serveur de contenus via le décodeur et via le réseau IP.

Ainsi, la première requête et la deuxième requête peuvent transiter par le décodeur, dont le point d'accès peut être un réseau préféré de l'utilisateur du terminal utilisateur, ce qui facilite l'envoi des requêtes.

Selon une variante, le terminal utilisateur peut accéder au serveur de contenus via une connexion à un réseau mobile.

Ainsi, la deuxième requête peut être envoyée même lorsque le terminal utilisateur n'accède pas à un réseau local lié à un décodeur du dispositif d'affichage.

Selon un mode de réalisation, le procédé peut comprendre en outre, sur réception de l'extrait de flux multimédia ou du lien pour obtenir l'extrait de flux multimédia, une étape de publication de l'extrait de flux multimédia ou dudit lien sur un fil d'actualités de l'utilisateur.

L'acquisition d'un extrait sur un terminal utilisateur facilite le partage de cet extrait, ce qui n'est pas possible lorsque l'extrait est enregistré sur le décodeur, comme détaillé en partie introductive.

Un deuxième aspect de l'invention concerne un programme informatique comportant des instructions pour la mise en oeuvre du procédé selon le premier aspect de l'invention, lorsque ces instructions sont exécutées par un processeur.

Un troisième aspect de l'invention concerne un terminal utilisateur pour l'acquisition d'un extrait de flux multimédia en cours de diffusion sur un dispositif d'affichage d'un utilisateur, le dispositif d'affichage étant distinct du terminal utilisateur, le terminal utilisateur comprenant :
- une interface de réception d'une entrée utilisateur pour recevoir un extrait du flux multimédia en cours de diffusion sur le dispositif d'affichage ;
- un processeur configuré pour envoyer, via une interface de transmission, une première requête au dispositif d'affichage pour requérir un identifiant du flux multimédia en cours de diffusion, et pour, sur réception par l'interface de réception de l'identifiant du flux multimédia en cours de diffusion, envoyer une deuxième requête au serveur de contenus pour recevoir l'extrait de flux multimédia, ladite deuxième requête comprenant une estampille temporelle de l'entrée utilisateur, l'identifiant du flux multimédia en cours de diffusion et une durée de l'extrait de flux multimédia.

L'interface de réception est en outre apte à recevoir depuis le serveur de contenus, ledit extrait de flux multimédia ou un lien pour obtenir ledit extrait de flux multimédia.

D'autres caractéristiques et avantages de l'invention apparaîtront à l'examen de la description détaillée ci-après, et des dessins annexés sur lesquels:
- la figure 1 illustre un système selon un mode de réalisation de l'invention ;
- la figure 2 est un diagramme illustrant les étapes d'un procédé selon un mode de réalisation de l'invention.

- la figure 3 illustre un terminal utilisateur selon un mode de réalisation de l'invention ;
- la figure 4 illustre un serveur de contenus selon un mode de réalisation de l'invention.

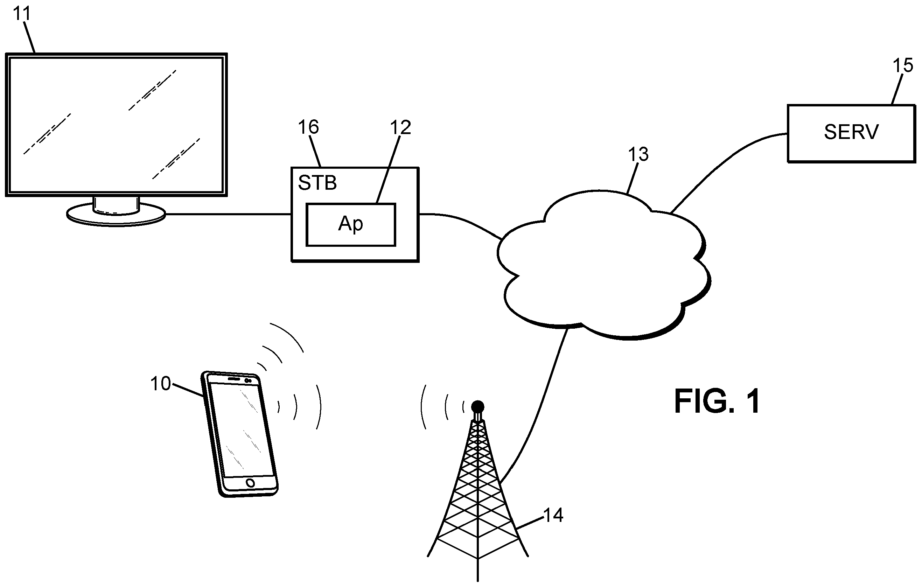

La figure 1 illustre un système selon un mode de réalisation de l'invention.

Le système comprend un terminal utilisateur 10, tel qu'un Smartphone, une tablette tactile, un ordinateur fixe ou portable, ou tout autre terminal présentant une interface utilisateur tel qu'un clavier, un écran tactile, une souris, etc. Le terminal utilisateur 10 est en outre apte à accéder à un réseau 13, tel qu'un réseau IP, par l'intermédiaire d'un point d'accès 12 filaire ou sans-fil. Sur la figure 1, un point d'accès 12 sans-fil, de type Wi-fi par exemple, a été représenté.

En variante, le terminal utilisateur 10 peut accéder au réseau IP 13 via une station de base 14 d'un réseau mobile (de type 3G, 4G ou toute autre génération).

Le point d'accès 12 peut être intégré dans un décodeur 16 de type Set Top Box par exemple, le décodeur 16 étant relié à un dispositif d'affichage 11, tel qu'un téléviseur, un écran d'ordinateur de bureau ou un vidéoprojecteur. En variante, le point d'accès 12 est distinct du décodeur 16, qui peut accéder au point d'accès via une liaison filaire par exemple.

Le décodeur 16 est apte à recevoir un flux multimédia diffusé, tel qu'un flux télévisuel multiplexé, et est apte à transmettre le flux multimédia d'une chaîne au dispositif d'affichage 11 pour affichage du flux multimédia de la chaîne en cours de diffusion.

L'utilisateur peut interagir avec le téléviseur via le décodeur 16 et une télécommande non représentée sur la figure 1, ou via une interface utilisateur du décodeur (des boutons ou un écran tactile par exemple).

Un serveur de contenus 15 est accessible via le réseau IP 13. Le serveur de contenus 15 peut, selon l'invention, être un serveur de l'opérateur en charge de la diffusion des flux multimédia de chaînes télévisuelles vers les décodeurs 16 des utilisateurs. A cet effet, les flux multimédia peuvent être diffusés depuis le serveur 15 ou depuis un autre serveur de l'opérateur. En variante, les flux multimédia peuvent être diffusés par voie Hertzienne via des antennes dédiées.

Le serveur 15 stocke les flux multimédia, par exemple découpés sous forme de programmes, télévisuels par exemple, dans une mémoire interne. Les programmes stockés sont respectivement associés à un identifiant de flux multimédia (un identifiant de chaîne de télévision par exemple) et à une plage horaire de diffusion.

Le serveur 15 peut en outre stocker des métadonnées ou contenus contextuels associés à certains programmes ou à certains flux multimédia (certaines chaînes). Ainsi, lors de la visualisation d'un flux multimédia, un utilisateur peut requérir par l'utilisation de la télécommande des contenus contextuels (sous-titre, contenu commercial) en rapport avec le flux en cours de diffusion. Le décodeur 15 peut ainsi envoyer une requête au serveur 15 afin de requérir de tels contenus contextuels, la requête pouvant contenir un identifiant du flux en cours de diffusion.

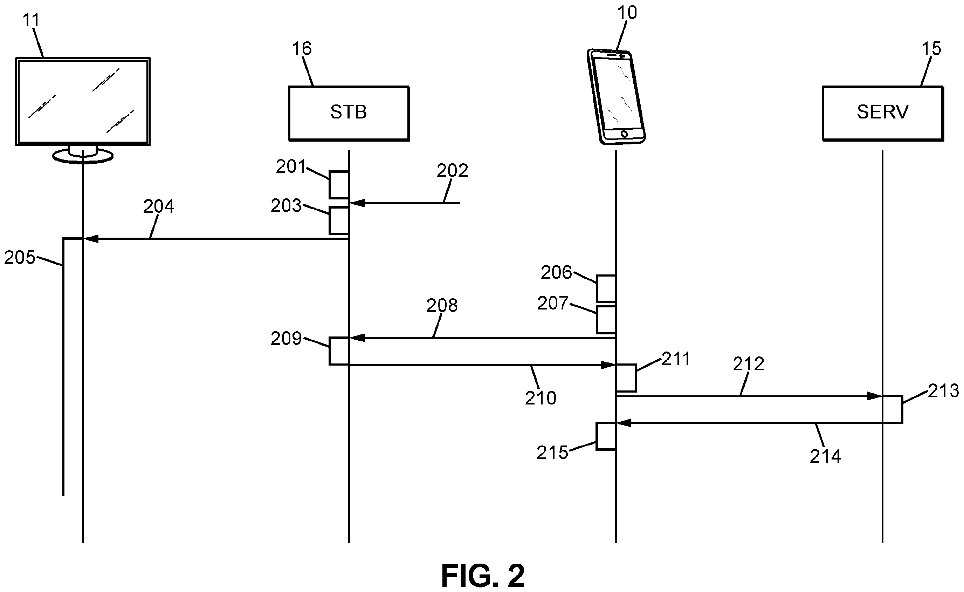

La figure 2 est un diagramme d'échanges illustrant les étapes d'un procédé selon un mode de réalisation de l'invention.

A une étape 201, l'utilisateur allume le décodeur 201 qui commence alors à recevoir les flux multimédia à une étape 202. Les flux multimédia sont traités à une étape 203 par le décodeur 16, par exemple afin de les démultiplexer pour transmettre le flux multimédia correspondant à une chaîne sélectionnée par l'utilisateur, au dispositif d'affichage 11, à une étape 204.

Le dispositif d'affichage 11 affiche alors le flux multimédia en cours de diffusion et reçu du décodeur 16 à une étape 205.

A une étape 206, l'utilisateur peut lancer une application dédiée à l'opérateur en charge de la diffusion des contenus, par exemple une application dédiée au serveur 15, permettant ainsi au terminal utilisateur 10 de communiquer avec le serveur 15 distant.

A une étape 207, l'utilisateur requiert l'enregistrement d'un extrait du flux multimédia en cours de diffusion affiché sur le dispositif d'affichage 11, via une entrée utilisateur sur le terminal utilisateur 10. Aucune restriction n'est attachée à l'entrée utilisateur qui dépend notamment de l'interface utilisateur du terminal utilisateur 10 et de l'interface graphique utilisateur de l'application dédiée au serveur de contenus 15. Par exemple, l'entrée utilisateur peut être la sélection (clic ou saisie tactile) d'un bouton « partage du flux en cours » affiché sur l'interface graphique de l'application.

Sur réception de l'entrée utilisateur, le terminal utilisateur 10 envoie une première requête au dispositif d'affichage 11, à une étape 208, pour requérir un identifiant du flux multimédia en cours de diffusion. La première requête est ainsi envoyée au décodeur 16, via une voie filaire ou sans-fil (par exemple lorsque le terminal utilisateur 10 accède à un réseau local Wi-fi du décodeur 16).

A une étape 209, le décodeur traite la première requête et récupère un identifiant du flux en cours de diffusion affiché sur le dispositif d'affichage 11 (par exemple un identifiant de chaîne de télévision) et génère un message de réponse comprenant l'identifiant du flux en cours de diffusion.

Le message de réponse est renvoyé au terminal utilisateur 10 à une étape 210.

A une étape 211, sur réception du message de réponse comprenant l'identifiant du flux multimédia en cours de diffusion, le terminal utilisateur 10 génère une deuxième requête à une étape 211 afin de recevoir l'extrait de flux multimédia, la deuxième requête comprenant une estampille temporelle de l'entrée utilisateur, l'identifiant du flux multimédia en cours de diffusion et une durée de l'extrait de flux multimédia.

L'estampille temporelle peut être stockée dans le terminal utilisateur 10 sur réception de l'entrée utilisateur 207. Aucune restriction n'est attachée à l'estampille temporelle, qui peut être absolue (date, heure, minute et seconde) ou relative (instant en minutes et secondes d'un programme donné diffusé sur une chaîne). Une horloge interne du terminal utilisateur 10 peut être utilisée pour la détermination de l'estampille temporelle.

La durée de l'extrait de flux multimédia requis peut être par exemple prédéterminée, ce qui accélère la génération de la deuxième requête dans la mesure où une deuxième entrée utilisateur pour définir la durée requise n'est pas nécessaire. En variante, l'utilisateur peut saisir une durée de l'extrait requis, via une interface utilisateur du terminal utilisateur 10.

A une étape 212, le terminal utilisateur 10 envoie la deuxième requête au serveur de contenus 15, via la station de base 14 ou via le point d'accès 12.

A une étape 213, le serveur de contenus 15 consulte une mémoire interne afin d'en extraire le flux multimédia identifié. Sur la base de l'estampille temporelle et de la durée indiquées dans la deuxième requête, le serveur de contenus 15 génère un extrait du flux multimédia.

A une étape 214, l'extrait du flux multimédia généré est envoyé par le serveur de contenus 15 à une étape 10. En variante ou en complément, un lien (de type lien URL par exemple) vers l'extrait du flux multimédia généré est envoyé au terminal utilisateur 10. Dans ce cas, le serveur de contenus 15 stocke localement l'extrait du flux multimédia. En complément, la deuxième requête peut comprendre un identifiant de l'utilisateur (par exemple un identifiant auprès de l'opérateur, ou un couple identifiant/mot de passe, une adresse email, etc) et l'extrait du flux multimédia peut être stocké dans une zone mémoire du serveur 15 dédiée à l'utilisateur identifié. Une telle zone mémoire peut être gérée à distance via le terminal utilisateur 10, afin de supprimer certains extraits, de les télécharger ou de les envoyer vers le décodeur 16 également identifié auprès du serveur 15. L'identifiant utilisateur du décodeur et l'identifiant utilisateur du terminal utilisateur 10 sont de préférence identiques.

Sur réception de l'extrait du flux multimédia ou du lien pour obtenir l'extrait de flux multimédia, le terminal utilisateur 10 peut publier l'extrait de flux multimédia ou le lien sur un fil d'actualités de l'utilisateur, à une étape optionnelle 215. Par exemple, la publication peut consister à téléverser l'extrait multimédia vers un serveur distant en charge de la gestion du fil d'actualités de l'utilisateur (un serveur de réseau social par exemple)

Optionnellement, l'étape 215 peut être mise en oeuvre suite à une entrée utilisateur validant la publication du lien ou de l'extrait.

Ainsi, la présente invention permet l'acquisition d'extraits de flux multimédia de manière aisée et rapide pour l'utilisateur, en réduisant les interactions nécessaires pour l'obtention de l'extrait. De plus, l'acquisition de l'identifiant du flux est automatisée entre le terminal utilisateur 10 et le décodeur 16, améliorant ainsi la réactivité associée à l'envoi de la deuxième requête. En outre, l'acquisition de l'extrait peut être opérée via un terminal utilisateur 10 présentant une interface utilisateur plus ergonomique que celle du décodeur 16 (qui est généralement une télécommande).

L'acquisition d'un extrait sur un terminal utilisateur 10 facilite également le partage de cet extrait, ce qui n'est pas le cas lorsque l'extrait est enregistré sur le décodeur 16, comme détaillé en partie introductive.

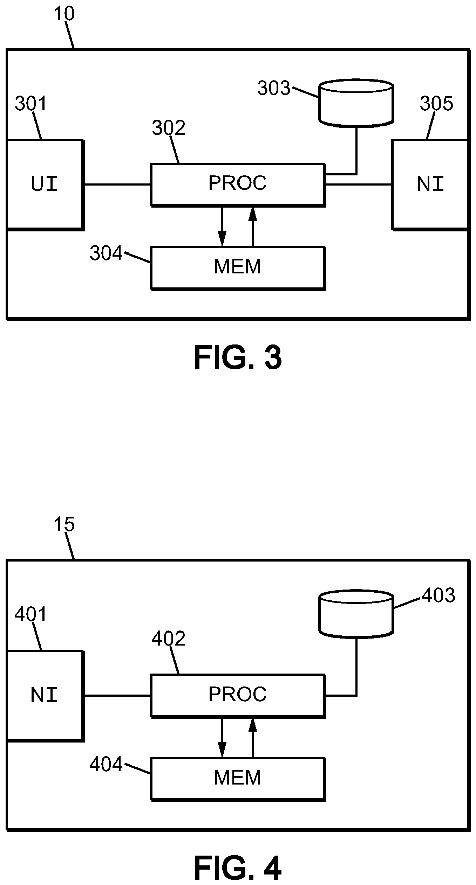

La figure 3 représente un terminal utilisateur 10 selon un mode de réalisation de l'invention.

Le terminal utilisateur 10 comprend une mémoire vive 304 et un processeur 302 pour stocker des instructions permettant la mise en oeuvre des étapes 206, 207, 211 et 215 décrites ci-avant. Le terminal utilisateur 10 comporte aussi une mémoire de stockage 303 pour le stockage de données destinées à être conservées pendant ou après l'application du procédé. La mémoire de stockage 303 peut notamment stocker temporairement l'identifiant du flux multimédia, et peut stocker l'extrait ou le lien reçu. Le terminal utilisateur 10 comporte en outre une interface utilisateur 301 apte à recevoir des entrées utilisateur. Comme précédemment expliqué, aucune restriction n'est attachée à l'interface utilisateur 301 qui peut être un écran tactile, un clavier, une souris, etc. Le terminal utilisateur 10 peut comprendre en outre une interface réseau 305 pouvant comprendre une interface Wi-fi et/ou une interface vers un réseau mobile.

La figure 4 présente un serveur de contenus 15 selon un mode de réalisation de l'invention.

Le serveur 15 comprend une mémoire vive 404 et un processeur 402 pour stocker des instructions permettant la mise en oeuvre de l'étape 213 de la figure 2. Le serveur 15 comprend également une mémoire de stockage 403 pour le stockage de données destinées à être conservées pendant ou après l'application du procédé. La mémoire de stockage 403 peut notamment stocker des flux multimédia en association avec des identifiants de flux multimédia. Par exemple, elle peut stocker les programmes d'une journée d'une chaîne de télévision ou d'une pluralité de chaînes de télévision. Elle peut en outre stocker des métadonnées ou des données contextuelles associées respectivement à des flux multimédias ou à des programmes. Le serveur de contenus 15 comporte en outre une interface réseau 401 apte à recevoir les secondes requêtes à l'étape 212 et à transmettre l'extrait de flux multimédia ou le lien à l'étape 214. L'interface réseau 401 peut également recevoir des requêtes de métadonnées ou de données contextuelles et peut transmettre, en retour, des métadonnées ou des données contextuelles. En complément, l'interface réseau 401 peut recevoir une requête de programme (par exemple lorsque le serveur 15 propose des services de vidéo en rattrapage ou à la demande) et peut renvoyer un programme en retour.

Le processeur 402 est apte, sur réception de l'estampille temporelle et de l'identifiant du flux multimédia, à déterminer le début d'un extrait à extraire dans un flux multimédia. Comme indiqué précédemment, l'estampille temporelle peut être absolue (une date) ou relative (un instant dans un programme d'une chaîne télévisée). Le processeur 402 est ensuite apte à mettre en oeuvre un traitement vidéo permettant l'extraction d'un extrait commençant au début déterminé, et dont la durée correspond à la durée indiquée dans la seconde requête.

## Revendications

1. Procédé d'acquisition d'un extrait de flux multimédia en cours de diffusion sur un dispositif d'affichage (11) d'un utilisateur, le procédé étant mis en oeuvre dans un terminal utilisateur (10) distinct du dispositif d'affichage et comprenant les étapes suivantes:
- sur réception (207) d'une entrée utilisateur pour recevoir un extrait du flux multimédia en cours de diffusion sur le dispositif d'affichage, envoyer (208) via une interface de transmission (305), une première requête au dispositif d'affichage pour requérir un identifiant du flux multimédia en cours de diffusion ;
- sur réception (210) de l'identifiant du flux multimédia en cours de diffusion, envoyer (212) via ladite interface de transmission (305), une deuxième requête au serveur de contenus, pour recevoir l'extrait de flux multimédia, ladite deuxième requête comprenant une estampille temporelle de l'entrée utilisateur, l'identifiant du flux multimédia en cours de diffusion et une durée de l'extrait de flux multimédia à générer par le serveur de contenus;
- recevoir (214), depuis le serveur de contenus, ledit extrait de flux multimédia ou un lien pour obtenir ledit extrait de flux multimédia.

2. Procédé d'acquisition selon la revendication 1, dans lequel la durée de l'extrait de flux multimédia est prédéterminée.

3. Procédé selon la revendication 1 ou 2, comprenant une étape préalable de lancement (206), sur le terminal utilisateur (10), d'une application dédiée au serveur de contenus, dans lequel l'entrée utilisateur est reçue depuis une interface graphique de l'application lancée.

4. Procédé selon l'une des revendications précédentes, dans lequel l'identifiant du flux multimédia en cours de diffusion est reçu depuis un décodeur (16) relié au dispositif d'affichage (11), ledit décodeur étant apte à traiter un flux multimédia reçu pour un affichage sur le dispositif d'affichage.

5. Procédé selon la revendication 4, dans lequel le décodeur (16) comprend en outre un point d'accès sans-fil à un réseau IP, et dans lequel le terminal utilisateur (10) accède au serveur de contenus via le décodeur et via le réseau IP.

6. Procédé selon l'une des revendications 1 à 4, dans lequel le terminal utilisateur (10) accède au serveur de contenus via une connexion à un réseau mobile.

7. Procédé selon l'une des revendications précédentes, comprenant en outre, sur réception (214) de l'extrait de flux multimédia ou du lien pour obtenir ledit extrait de flux multimédia, la publication dudit extrait de flux multimédia ou dudit lien sur un fil d'actualités de l'utilisateur.

8. Programme informatique comportant des instructions pour la mise en oeuvre des étapes du procédé selon l'une quelconque des revendications précédentes, lorsque ces instructions sont exécutées par un processeur.

9. Terminal utilisateur pour l'acquisition d'un extrait de flux multimédia en cours de diffusion sur un dispositif d'affichage (11) d'un utilisateur, ledit dispositif d'affichage étant distinct du terminal utilisateur (10), ledit terminal utilisateur comprenant :
- une interface de réception (301) d'une entrée utilisateur pour recevoir un extrait du flux multimédia en cours de diffusion sur le dispositif d'affichage ;
- un processeur (302) configuré pour envoyer, via une interface de transmission (305), une première requête au dispositif d'affichage pour requérir un identifiant du flux multimédia en cours de diffusion, et pour, sur réception par l'interface de réception de l'identifiant du flux multimédia en cours de diffusion, envoyer une deuxième requête au serveur de contenus pour recevoir l'extrait de flux multimédia, ladite deuxième requête comprenant une estampille temporelle de l'entrée utilisateur, l'identifiant du flux multimédia en cours de diffusion et une durée de l'extrait de flux multimédia à générer par le serveur de contenus;
dans lequel l'interface de réception est en outre apte à recevoir depuis le serveur de contenus, ledit extrait de flux multimédia ou un lien pour obtenir ledit extrait de flux multimédia.

## Patentansprüche

1. Verfahren zum Erfassen eines Ausschnitts eines gerade auf eine Anzeigevorrichtung (11) eines Benutzers gestreamten Multimediastroms, wobei das Verfahren in einem Benutzerendgerät (10) durchgeführt wird, das verschieden von der Anzeigevorrichtung ist, und die folgenden Schritte umfasst:
- beim Empfangen (207) einer Benutzereingabe, um einen Ausschnitt des gerade auf die Anzeigevorrichtung gestreamten Multimediastroms zu empfangen, Senden (208), über eine Übertragungsschnittstelle (305), einer ersten Anforderung an die Anzeigevorrichtung, um eine Kennung des gerade gestreamten Multimediastroms anzufordern;
- beim Empfangen (210) der Kennung des gerade gestreamten Multimediastroms, Senden (212), über die Übertragungsschnittstelle (305), einer zweiten Anforderung an den Inhalteserver, um den Multimediastrom-Ausschnitt zu empfangen, wobei die zweite Anforderung einen Zeitstempel der Benutzereingabe, die Kennung des gerade gestreamten Multimediastroms und eine Dauer des Multimediastrom-Ausschnitts, der von dem Inhalteserver zu erzeugen ist, umfasst;
- Empfangen (214), von dem Inhalteserver, des Multimediastrom-Auschnitts oder eines Links, um den Multimediastrom-Ausschnitt zu erhalten.

2. Verfahren zum Erfassen nach Anspruch 1, wobei die Dauer des Multimediastrom-Ausschnitts vorbestimmt ist.

3. Verfahren nach Anspruch 1 oder 2, umfassend einen vorherigen Schritt des Startens (206), auf dem Benutzerendgerät (10), einer für den Inhalteserver dedizierten Anwendung, wobei die Benutzereingabe von einer grafischen Schnittstelle der gestarteten Anwendung aus empfangen wird.

4. Verfahren nach einem der vorhergehenden Ansprüche, wobei die Kennung des gerade gestreamten Multimediastroms von einem Decodierer (16) empfangen wird, der mit der Anzeigevorrichtung (11) verbunden ist, wobei der Decodierer geeignet ist, einen empfangenen Multimediastrom zwecks Anzeige auf der Anzeigevorrichtung zu verarbeiten.

5. Verfahren nach Anspruch 4, wobei der Decodierer (16) ferner einen drahtlosen Zugangspunkt zu einem IP-Netzwerk umfasst und wobei das Benutzerendgerät (10) auf den Inhalteserver über den Decodierer und über das IP-Netzwerk zugreift.

6. Verfahren nach einem der Ansprüche 1 bis 4, wobei das Benutzerendgerät (10) auf den Inhalteserver über eine Verbindung zu einem Mobilfunknetz zugreift.

7. Verfahren nach einem der vorhergehenden Ansprüche, umfassend ferner, beim Empfangen (214) des Multimediastrom-Ausschnitts oder des Links, um den Multimediastrom-Ausschnitt zu erhalten, das Veröffentlichen des Multimediastrom-Ausschnitts oder des Links über einen Newsfeed des Benutzers.

8. Computerprogramm, das Anweisungen umfasst, die bei der Ausführung dieser Anweisungen durch einen Prozessor die Schritte des Verfahrens nach einem der vorhergehenden Ansprüche ausführen.

9. Benutzerendgerät zum Erfassen eines gerade auf eine Anzeigevorrichtung (11) eines Benutzers gestreamten Multimediastrom-Ausschnitts, wobei die Anzeigevorrichtung von dem Benutzerendgerät (10) verschieden ist, wobei das Benutzerendgerät umfasst:
- eine Empfangsschnittstelle (301) für eine Benutzereingabe, um einen Ausschnitt des gerade auf die Anzeigevorrichtung gestreamten Multimediastroms zu empfangen;
- einen Prozessor (302), der dazu ausgestaltet ist, über eine Übertragungsschnittstelle (305) eine erste Anforderung an die Anzeigevorrichtung zu senden, um eine Kennung des gerade gestreamten Multimediastroms zu erhalten und um, beim Empfangen der Kennung des gerade gestreamten Multimediastroms durch die Empfangsschnittstelle, eine zweite Anforderung an den Inhalteserver zu senden, um den Multimediastrom-Ausschnitt zu empfangen, wobei die zweite Anforderung einen Zeitstempel der Benutzereingabe, die Kennung des gerade gestreamten Multimediastroms und eine Dauer des Multimediastrom-Ausschnitts, der von dem Inhalteserver zu erzeugen ist, umfasst;
wobei die Empfangsschnittstelle ferner geeignet ist, von dem Inhalteserver den Multimediastrom-Ausschnitt oder einen Link, um den Multimediastrom-Ausschnitt zu erhalten, zu empfangen.

## Claims

1. Method for acquiring a multimedia-stream excerpt from a multimedia stream being delivered to a display device (11) of a user, the method being implemented in a user terminal (10) distinct from the display device and comprising the following steps:
- on receipt (207) of a user input with a view to receiving a multimedia-stream excerpt from the multimedia stream being delivered to the display device, sending (208) via a transmit interface (305), a first request to the display device, with a view to requesting an identifier of the multimedia stream being delivered;
- on receipt (210) of the identifier of the multimedia stream being delivered, sending (212), via the said transmit interface (305), a second request to the content server, with a view to receiving the multimedia-stream excerpt, said second request containing a timestamp of the user input, the identifier of the multimedia stream being delivered and a duration of the multimedia-stream excerpt to be generated by the content server;
- receiving (214), from the content server, said multimedia-stream excerpt or a link for obtaining said multimedia-stream excerpt.

2. Acquiring method according to Claim 1, wherein the duration of the multimedia-stream excerpt is predetermined.

3. Method according to Claim 1 or 2, comprising a prior step of launching (206), on the user terminal (10), an application dedicated to the content server, wherein the user input is received from a graphical interface of the launched application.

4. Method according to one of the preceding claims, wherein the identifier of the multimedia stream being delivered is received from a decoder (16) connected to the display device (11), said decoder being capable of processing a received multimedia stream with a view to display on the display device.

5. Method according to Claim 4, wherein the decoder (16) further comprises a wireless access point to an IP network, and wherein the user terminal (10) accesses the content server via the decoder and via the IP network.

6. Method according to one of Claims 1 to 4, wherein the user terminal (10) accesses the content server via a connection to a mobile network.

7. Method according to one of the preceding claims, further comprising, on receipt (214) of the multimedia-stream excerpt or the link for obtaining said multimedia-stream excerpt, publishing said multimedia-stream excerpt or said link on a newsfeed of the user.

8. Computer programme comprising instructions for implementing the steps of the method according to any of the preceding claims, when these instructions are executed by a processor.

9. User terminal for acquiring a multimedia-stream excerpt from a multimedia stream being delivered to a display device (11) of a user, said display device being distinct from the user terminal (10), said user terminal comprising:
- an interface (301) for receiving a user input with a view to receiving a multimedia-stream excerpt from the multimedia stream being delivered to the display device;
- a processor (302) configured to send, via a transmit interface (305), a first request to the display device, with a view to requesting an identifier of the multimedia stream being delivered, and, on receipt by the receiving interface of the identifier of the multimedia stream being delivered, to send a second request to the content server, with a view to receiving the multimedia-stream excerpt, said second request containing a timestamp of the user input, the identifier of the multimedia stream being delivered, and a duration of the multimedia-stream excerpt to be generated by the content server;
wherein the receiving interface is further capable of receiving, from the content server, said multimedia-stream excerpt or a link for obtaining said multimedia-stream excerpt.
